# FASCICULE DE BREVET EUROPEEN

(11) **EP 2 112 402 B1**
(45) Date de publication et mention de la délivrance du brevet: **02.11.2011**
(21) Numéro de dépôt: 09290261.8
(22) Date de dépôt: 09.04.2009
(51) Int. Cl.: F16H 25/20, F16H 25/24, F16H 25/22

(54) **Actionneur à tige principale et tige auxiliaire**
Stellglied mit Haupt- und Nebenstange
Actuator with main rod and auxiliary rod

(30) Priorité: 21.04.2008 FR 0802198
(43) Date de publication de la demande: 28.10.2009
(73) Titulaire: Messier-Bugatti-Dowty, 78140 Velizy Villacoublay (FR)
(72) Inventeur: Liegeois, Pierre-Yves, 92150 Suresnes (FR); Bucheton, Daniel, 78150 Le Chesnay (FR)
(74) Mandataire: Parzy, Benjamin Alain

(56) Documents cités:
- FR-A- 2 895 483
- GB-A- 2 272 205
- US-A1- 2006 113 933

## Description

L' invention concerne un actionneur à tige principale et tige auxiliaire.

### ARRIERE-PLAN DE L'INVENTION

On connaît, notamment du document FR 2 895 483, qui constitue l'état de la technique le plus proche, un actionneur télescopique comportant un corps dans lequel une tige principale est montée pour coulisser télescopiquement selon un axe de coulissement entre une position rentrée et une position sortie, l'actionneur télescopique comportant une tige auxiliaire montée pour coulisser télescopiquement dans la tige principale selon le dit axe de coulissement entre une position rentrée et une position sortie, l'actionneur comportant des moyens commandés de retenue de la tige auxiliaire en position rentrée dans la tige principale. Ainsi, tant que la tige principale coulisse correctement dans le corps, la tige auxiliaire reste bloquée dans la tige principale et l'actionneur fonctionne comme un actionneur classique. Si la tige principale vient à être bloquée, il suffit alors de commander les moyens de retenue pour qu'ils libèrent la tige auxiliaire, de sorte que l'actionneur est à nouveau libre de s'allonger et qu'il ne bloque plus le mouvement de la chaîne mécanique dans laquelle il est inséré.

L'actionneur comporte en outre des moyens de freinage d'un coulissement de la tige auxiliaire dans la tige principale dans le sens d'une extension.

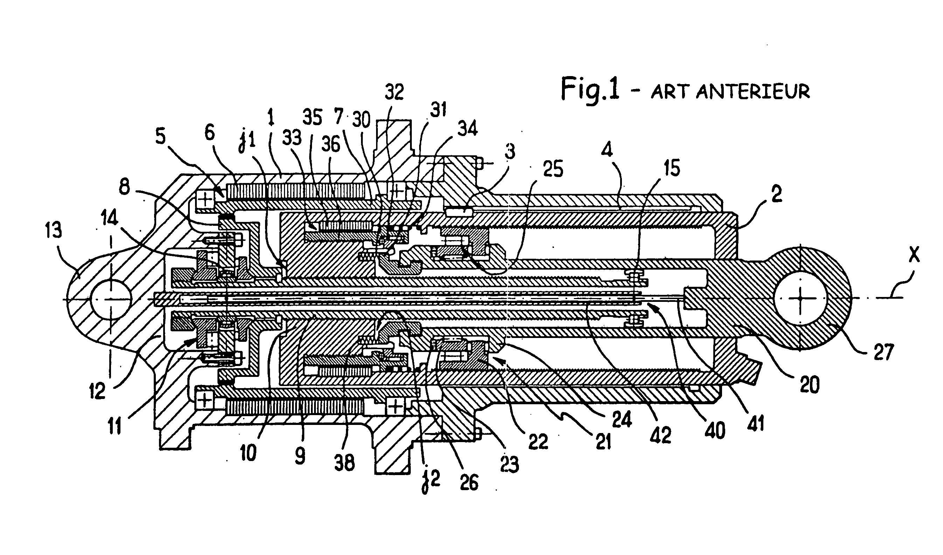

Un tel actionneur est maintenant décrit en référence à la figure 1 qui représente schématiquement en coupe un actionneur du type précité, donc connu en soi. L'actionneur comporte un corps 1 définissant une cavité cylindrique fermée par un fond 12 qui porte une chape 13. Une tige principale 2 est montée dans la cavité pour coulisser selon un axe de coulissement X et saillir plus ou moins du corps 1 par une extrémité ouverte de la cavité formant palier.

L'actionneur comporte des moyens commandés de coulissement de la tige principale 2 par rapport au corps 1. Ces moyens de coulissement comportent :
- une clavette 3 solidaire de la tige principale 2 qui coopère avec une rainure 4 ménagée dans la paroi de la cavité du corps 1 pour empêcher la tige principale 2 de tourner relativement au corps 1 ;
- un moteur de manoeuvre 5 électrique comportant un stator 6 monté fixe sur le corps 1 et un rotor 7 monté tournant sur le corps 1 selon l'axe X ;
- une vis mère 9 qui s'étend selon l'axe X et qui est montée tournante sur le corps 1 selon l'axe X en étant entraînée en rotation par le rotor 7 par l'intermédiaire d'un coupleur 8. La vis mère 9 est retenue axialement sur le corps 1 au moyen d'une butée axiale à double effet 11 ;
- un écrou 10 homologue réalisé dans un fond de la tige principale traversé par la vis mère 9 pour constituer entre la vis mère 9 et la tige principale 2 une liaison hélicoïdale réversible.

Ainsi, une rotation du rotor 7 entraîne une rotation de la vis mère 9 qui entraîne un déplacement axial de la tige principale 2.

La tige principale 2 est creuse et définit une cavité dans laquelle une tige auxiliaire 20 est montée pour coulisser dans la tige principale 2 selon l'axe X et saillir d'une extrémité ouverte de celle-ci formant palier.

L'actionneur comporte des moyens commandés de retenue de la tige auxiliaire 20 en position rentrée dans la tige principale 2. Ces moyens de retenue comportent ici :
- une griffe 30 s'étendant intérieurement à la tige principale 2 ;
- un redan 31 monté en extrémité de la tige auxiliaire 20 et adapté à coopérer avec la griffe 30 ;
- un manchon de verrouillage 32 déplaçable axialement par un moteur de déverrouillage 33 à l'encontre d'un ressort de rappel 34 depuis une position de verrouillage (illustrée ici) dans laquelle il coiffe la griffe 30 pour l'empêcher de s'expanser radialement et une position de libération dans laquelle il laisse la griffe 30 libre de s'expanser radialement au passage du redan 31. A cet effet, le moteur de déverrouillage 33 comporte un stator 35 fixé sur la tige principale 2 et un rotor 36 qui coopère avec un filetage homologue de la tige principale 2 pour constituer une liaison hélicoïdale réversible. La rotation du rotor 36 provoque donc son déplacement axial. Le manchon de verrouillage 32 est porté en extrémité du rotor 36 en étant monté à rotation sur ce dernier au moyen de rouleaux.

L'actionneur comporte des moyens de freinage d'un coulissement de la tige auxiliaire 20 dans la tige principale 2 dans le sens d'une extension de la tige auxiliaire 20. Ces moyens de freinage, qui forment également un palier 21 de guidage de la tige auxiliaire 20 dans la tige principale 2, comprennent :
- un entraîneur 22 qui est fileté extérieurement et qui coopère avec un taraudage intérieur de la tige principale 2 pour constituer entre l'entraîneur 22 et la tige principale 2 une liaison hélicoïdale réversible ;
- une virole 23 qui est montée en rotation sur la tige auxiliaire 20 au moyen de rouleaux, l'entraîneur 22 étant lui-même monté en rotation sur la virole 23 au moyen de rouleaux, l'entraîneur 22 étant axialement prisonnier entre d'une part des rouleaux s'appuyant sur une butée 24 de la tige auxiliaire 20 et d'autre part la virole 23 ;
- une roue libre à cliquets 25 entre l'entraîneur 22 et la virole 23 qui, lorsque la tige auxiliaire 20 sort de la tige principale 2 et que l'entraîneur 22 tourne du fait de sa liaison hélicoïdale avec la tige principale 2, provoque la rotation de la virole 23. Par contre, lorsque la tige auxiliaire 20 rentre dans la tige principale 2, l'entraîneur 22 tourne mais n'entraîne pas la virole 23 en rotation ;
- une rondelle de frottement 26 portée par la tige auxiliaire 20 en regard d'une face libre de la virole 23 et adaptée à générer un frottement sur la virole 23 lorsque celle-ci tourne en étant appuyée contre la rondelle de frottement 26 sous l'effet de l'effort extérieur qui tire sur la tige auxiliaire 20.

On notera que la tige auxiliaire 20 est guidée axialement d'une part par l'extrémité ouverte de la tige principale 2 et d'autre part par le palier 21. La tige principale 2 est guidée axialement d'une part par l'extrémité ouverte du corps 1 et d'autre part par la coopération de l'écrou 10 avec la vis mère 9. Enfin, la vis mère 9 est guidée axialement à une extrémité par une liaison rotulée 14 insérée dans la butée à double effet 11, et à l'autre extrémité par un palier glissant rotulé 15 qui est monté pour coulisser à l'intérieur de la tige auxiliaire 20. Grâce à ces dispositions, il est inutile d'équiper la tige principale 2 d'un palier glissant à l'intérieur du corps 1.

### OBJET DE L'INVENTION

L'invention a pour objet un actionneur du type précité dans lequel le freinage de la tige auxiliaire est amélioré.

### BREVE DESCRIPTION DE L'INVENTION

En vue de la réalisation de ce but, on propose un actionneur télescopique comportant un corps dans lequel une tige principale est montée pour coulisser télescopiquement selon un axe de coulissement entre une position rentrée et une position sortie, l'actionneur télescopique comportant une tige auxiliaire montée pour coulisser télescopiquement dans la tige principale selon le dit axe de coulissement entre une position rentrée et une position sortie, l'actionneur comportant des moyens commandés de retenue de la tige auxiliaire en position rentrée dans la tige principale, et l'actionneur comportant en outre des moyens de freinage d'un coulissement de la tige auxiliaire dans la tige principale dans le sens d'une extension. Selon l'invention, la tige auxiliaire est filetée, la tige principale portant à son extrémité un palier tournant qui centre la tige auxiliaire dans la tige principale et qui coopère par une liaison hélicoïdale réversible avec le filetage de la tige auxiliaire de sorte qu'une sortie de la tige auxiliaire provoque une rotation du palier tournant, les moyens de freinage étant agencés pour freiner une rotation du palier tournant lors d'une extension de la tige auxiliaire.

Ainsi, l'agencement d'un filetage sur la tige auxiliaire de préférence à un taraudage intérieur sur la tige principale, pour provoquer la rotation d'un élément à freiner, permet l'utilisation d'un pas plus petit, et conduit donc à un couple de freinage plus faible, pour un même effort de freinage de la tige auxiliaire. Les moyens de freinage peuvent ainsi freiner directement le palier tournant, sans passer, comme dans le document FR 2 895 483 par un organe multiplicateur qui augmente la vitesse de rotation de la partie tournante à freiner.

De préférence alors, les moyens de freinage coopèrent directement avec le palier tournant et sont de type à freinage magnétique.

### BREVE DESCRIPTION DES DESSINS

L'invention sera mieux comprise à la lumière de la description qui suit en référence aux figures des dessins annexés parmi lesquelles, outre la figure 1 déjà décrite :

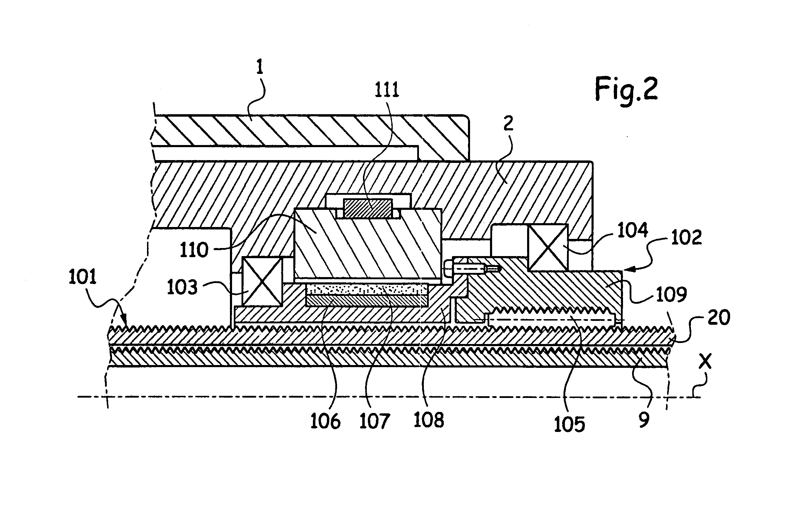

- la figure 2 est une demi-vue partielle en coupe schématique d'un actionneur selon un mode particulier de réalisation de l'invention. Les références des pièces communes avec celles de la figure 1 ont été gardées.

### DESCRIPTION DETAILLEE DE L'INVENTION

L'actionneur de l'invention illustré à la figure 2 est essentiellement similaire à l'actionneur de l'art antérieur illustré à la figure 1.

Il dispose toujours d'un corps 1 dans lequel une tige principale 2 est montée à coulissement télescopique. Une tige auxiliaire 20 est montée à coulissement dans la tige principale 2 d'un filetage extérieur 101 sur la tige auxiliaire 20. En outre, et bien que cela ne soit pas visible ici, il dispose des mêmes moyens commandés de retenue 30,31,32,33 de la tige auxiliaire 20 en position rentrée dans la tige principale 2, qui ne sont donc pas redécrits ici.

La différence réside dans la façon dont la tige auxiliaire 20 est guidée dans la tige principale 2 et dans la façon dont la tige auxiliaire 20 est freinée vis-à-vis de la tige principale 2 lorsque la tige auxiliaire 20 est libérée.

Plus précisément, la tige auxiliaire 20 comporte un filetage 101 sur sa surface externe. La tige principale 2 reçoit à son extrémité un palier 102 qui est monté tournant sur la tige principale 2 au moyen de roulements 103,104. Le palier tournant 102 est relié à la tige auxiliaire 20 par une liaison hélicoïdale réversible au moyen de rouleaux satellites filetés 105 qui s'étendent entre la tige auxiliaire 20 et le palier tournant 102 de sorte qu'une extension de la tige auxiliaire 20 provoque une rotation du palier tournant 102.

Ainsi, l'actionneur de l'invention comporte un palier tournant qui est disposé en extrémité de la tige principale 2 et qui centre la tige auxiliaire 20 dans la tige principale 2. L'extrémité de la tige auxiliaire 20 qui s'étend dans la tige principale 2 porte quant à elle un palier lisse (non visible ici) qui coulisse dans la tige principale, dont la paroi intérieure est maintenant lisse. Par rapport à la disposition de l'art antérieur illustré à la figure 1, les paliers sont inversés : le palier tournant 102 est maintenant disposé en extrémité de tige principale 2 et ne se déplace plus avec la tige auxiliaire 20, tandis que le palier lisse est maintenant disposé en extrémité de tige auxiliaire 20 et se déplace donc avec la tige auxiliaire 20.

L'actionneur de l'invention comporte des moyens de freinage de la tige auxiliaire 20, qui agissent sur le palier tournant 102 pour freiner sa rotation. Plus précisément, les moyens de freinage comportent :
- un rotor 106 disposé sur le palier tournant 102 pour tourner avec ce dernier. Le rotor 106 est ici en fer pur et reçoit des aimants permanents 107 disposés à la périphérie du rotor 106. En variante, le rotor 106 pourra être réalisé en acier magnétique. On remarquera que le palier tournant 102 est en deux parties 108,109, la partie 108 qui porte le rotor 106 étant réalisée en matériau non magnétique, par exemple en acier inoxydable amagnétique ;
- un stator 110, porté par la tige principale 2 et bloqué en rotation par une clavette 111. Le stator est réalisé en matériau conducteur non magnétique.

Le rotor 106 et le stator 110 sont en interaction magnétique de sorte que lorsque le palier tournant 102 et donc la rotor 106 tourne, un couple électromagnétique résistant s'établit qui tend à freiner la rotation du palier tournant 102, et donc la sortie de la tige auxiliaire 20. Ce moyen de freinage magnétique est purement passif et exerce sur la tige auxiliaire 20 un effort de freinage proportionnel à la vitesse de rotation du palier tournant 102, et donc à la vitesse de sortie de la tige auxiliaire 20.

Les moyens de freinage agissent ainsi directement sur l'élément (le palier tournant) en liaison hélicoïdale avec la tige auxiliaire 20.

L'invention n'est pas limitée à ce qui vient d'être décrit, mais bien au contraire englobe toute variante entrant dans le cadre défini par les revendications.

En particulier, bien que les moyens de freinage soient ici de type purement magnétique, on pourra employer d'autres moyens de freinage, comme par exemple des moyens de freinage à frottement.

## Revendications

1. Actionneur télescopique comportant un corps (1) dans lequel une tige principale (2) est montée pour coulisser télescopiquement selon un axe de coulissement (X) entre une position rentrée et une position sortie, l'actionneur télescopique comportant une tige auxiliaire montée pour coulisser télescopiquement dans la tige principale selon le dit axe de coulissement entre une position rentrée et une position sortie, l'actionneur comportant des moyens commandés de retenue (30,31,32,33) de la tige auxiliaire en position rentrée dans la tige principale, l'actionneur comportant en outre des moyens de freinage d'un coulissement de la tige auxiliaire dans la tige principale dans le sens d'une extension, **caractérisée en ce que** la tige auxiliaire (20) comporte un filetage (101) sur une surface externe, la tige principale (2) portant à son extrémité un palier tournant (102) qui centre la tige auxiliaire dans la tige principale et qui coopère par une liaison hélicoïdale réversible avec le filetage de la tige auxiliaire de sorte qu'une sortie de la tige auxiliaire provoque une rotation du palier tournant, les moyens de freinage (106,110) étant agencés pour freiner une rotation du palier tournant lors d'une extension de la tige auxiliaire.

2. Actionneur selon la revendication 1, dans lequel la liaison hélicoïdale réversible entre la tige auxiliaire (20) et le palier tournant (102) comporte des rouleaux satellites filetés (105).

3. Actionneur selon la revendication 1, dans lequel les moyens de freinage comprennent un rotor (106) porté par le palier tournant (102), et un stator (110) porté par la tige principale (2), le stator et le rotor étant en interaction magnétique pour générer un couple résistant lorsque le palier tournant (102) tourne.

4. Actionneur selon la revendication 3, dans lequel le rotor (106) porte des aimants permanents (107), et le stator (107) est en matériau conducteur non magnétique.

## Claims

1. A telescopic actuator comprising a cylinder (1) in which a main rod (2) is mounted to slide telescopically along a sliding axis (X) between a retracted position and an extended position, the telescopic actuator including an auxiliary rod mounted to slide telescopically in the main rod along said sliding axis between a retracted position and an extended position, the actuator including controlled retaining means (30, 31, 32, 33) for retaining the auxiliary rod in the retracted position inside the main rod, the actuator further including brake means for braking sliding of the auxiliary rod in the main rod in the extension direction, the actuator being **characterized in that** the auxiliary rod (20) has a thread (101) on an outside surface, the main rod (2) carrying at its end a rotary bearing (102) that centers the auxiliary rod inside the main rod and that co-operates via a reversible helical connection with the thread of the auxiliary rod such that extension of the auxiliary rod causes the rotary bearing to rotate, the brake means (106, 110) being arranged to brake rotation of the rotary bearing during extension of the auxiliary rod.

2. An actuator according to claim 1, wherein the reversible helical connection between the auxiliary rod (20) and the rotary bearing (102) includes threaded satellite rollers (105).

3. An actuator according to claim 1, wherein the brake means comprise a rotor (106) carried by the rotary bearing (102) and a stator (110) carried by the main rod (2), the stator and the rotor being in magnetic interaction to generate an opposing torque when the rotary bearing (102) rotates.

4. An actuator according to claim 3, wherein the rotor (106) carries permanent magnets (107), and the stator (110) is made of a non-magnetic conductive material.

## Patentansprüche

1. Teleskop-Aktuator, umfassend ein Gehäuse (1), in dem eine Hauptstange (2) entlang einer Verschiebungsachse (X) zwischen einer eingefahrenen Position und einer ausgefahrenen Position teleskopisch verschiebbar gelagert ist, wobei der Teleskop-Aktuator eine Hilfsstange umfasst, die in der Hauptstange entlang der genannten Verschiebungsachse zwischen einer eingefahrenen Position und einer ausgefahrenen Position teleskopisch verschiebbar gelagert ist, wobei der Aktuator gesteuerte Rückhaltemittel (30, 31, 32, 33) zum Halten der Hilfsstange in eingefahrener Position in der Hauptstange umfasst, wobei der Aktuator ferner Bremsmittel zum Bremsen einer Verschiebung der Hilfsstange in der Hauptstange in Ausfahrrichtung umfasst, **dadurch gekennzeichnet, dass** die Hilfsstange (20) auf einer Außenfläche ein Gewinde (101) umfasst, wobei die Hauptstange (2) an ihrem Ende ein Drehlager (102) trägt, das die Hilfsstange in der Hauptstange zentriert und über eine reversible schraubenförmige Verbindung mit dem Gewinde der Hilfsstange derart zusammenwirkt, dass ein Ausfahren der Hilfsstange eine Drehung des Drehlagers hervorruft, wobei die Bremsmittel (106, 110) derart ausgebildet sind, dass sie eine Drehung des Drehlagers während eines Ausfahrens der Hilfsstange bremsen.

2. Aktuator nach Anspruch 1, wobei die reversible schraubenförmige Verbindung zwischen der Hilfsstange (20) und dem Drehlager (102) mit Gewinden versehene Satellitenrollen (105) umfasst.

3. Aktuator nach Anspruch 1, wobei die Bremsmittel einen von dem Drehlager (102) getragenen Rotor (106) und einen von der Hauptstange (2) getragenen Stator (110) umfassen, wobei der Stator und der Rotor in magnetischer Wechselwirkung stehen, um ein Widerstandsmoment zu erzeugen, wenn sich das Drehlager (102) dreht.

4. Aktuator nach Anspruch 3, wobei der Rotor (106) Dauermagneten (107) trägt und der Stator (107) aus einem nicht-magnetischen leitenden Material ist.
